# EUROPEAN PATENT APPLICATION

(11) **EP 1 657 889 A1**
(43) Date of publication of application: **17.05.2006**
(21) Application number: 05022794.1
(22) Date of filing: 19.10.2005
(51) Int. Cl.: H04M 1/02

(54) **Portable communication apparatus with triangular prism structure**

(30) Priority: 11.11.2004 KR 2004091758
(71) Applicant: Samsung Electronics Co., Ltd., Suwon-si, Gyeonggi-Do (KR)
(72) Inventor: Kim, Joon-Suh, Yeongtong-gu,Suwon-si, Gyeonggi-do (KR); Lee, Chang-Soo, Yeongtong-gu,Suwon-si, Gyeonggi-do (KR)
(74) Representative: Grünecker, Kinkeldey, Stockmair & Schwanhäusser Anwaltssozietät

(57) **Abstract**

A portable communication apparatus equipped with a tri-column type cradling function, and wide-view and stereophonic sound functions. The portable communication apparatus includes a central housing, a first housing rotatably coupled to the central housing about a first hinge axis in such a manner that the first housing is movable closely to or remotely from the central housing, a second housing rotatably coupled to the central housing about a second hinge axis, which is parallel to the first hinge axis, in such a manner that the second housing is movable closely to or remotely from the central housing and first housing, and a support unit for supporting the first and second housings, thereby maintaining the first and second housings and the central housing in a tri-column structure.

## Description

### BACKGROUND OF THE INVENTION

### 1. Field of the Invention

The present invention relates generally to a digital communication apparatus, such as a cellular phone, a PDA (personal digital assistant), an HHP (handheld phone), a camera phone, a game phone, or a message phone, and more particularly to a portable communication apparatus equipped with a tri-column type cradling function as well as wide-view and stereophonic sound functions.

### 2. Description of the Related Art

In general, "portable communication apparatus" refers to an electronic appliance that enables users to perform wire/wireless communication with other users while carrying the portable communication apparatus. In consideration of portability, designs of such portable communication apparatuses have tended toward compactness, slimness, and lightness, and also toward multimedia availability with a wider variety of functions. In particular, future portable communication apparatuses are expected to incorporate greater multi-functionality and multi-purpose utilization, as well as greater compactness and lightness. The portable communication apparatuses will likely be modified to be suitable for various multimedia environments or Internet environments.

Conventional portable communication apparatuses may be classified into various types according to their external appearances. For example, portable communication apparatuses are classified into bar-type portable communication apparatuses, flip-type portable communication apparatuses, and folder-type portable communication apparatuses. The bar-type portable communication apparatus has a single housing shaped like a bar. The flip-type portable communication apparatus has a flip, which is pivotably mounted to a bar-shaped housing by a hinge unit. The folder-type portable communication apparatus has a folder coupled to a single bar-shaped housing by a hinge unit in such a manner that the folder can be rotated in order to be folded to or unfolded from the housing.

In addition, the portable communication apparatuses can be classified into neck wearable-type portable communication apparatuses and wrist-type portable communication apparatuses according to their positions with respect to a human body. Obviously, the user can wear the neck wearable-type portable communication apparatus on the neck by using a string and, the user can wear the wrist-type portable communication apparatus on the wrist.

Further, the portable communication apparatuses may be classified into rotation-type communication apparatuses and sliding-type communication apparatuses according to the ways of opening and closing the communication apparatuses. In the rotation-type portable communication apparatus, two housings are coupled to each other in such a manner that one housing rotates to be opened or closed relative to the other while they face each other. In the sliding-type portable communication apparatus, two housings are coupled to each other in such a manner that one housing slides to be opened or closed relative to the other. These variously classified portable communication apparatuses are easily understood by those skilled in the art.

Additionally, conventional portable communication apparatuses now tend to have a function of transmitting data at a high speed in addition to the basic function of performing voice communication. That is, according to the increase of demand by consumers, portable communication apparatuses now tend to provide a service using a wireless communication technology capable of transmitting data at a high speed.

Currently, portable communication apparatuses tend to be equipped with camera lenses, which enable each of the communication apparatuses to transmit an image signal. That is, current portable communication apparatuses may have an internal or an external camera lens module, which enables a user to make image communication with a desired partner or to photograph a desired subject.

However, the conventional portable communication apparatus requires a separate cradle for enabling a user to conveniently view an image displayed in a display unit in a comfortable position. That is, the display unit must be maintained at a predetermined tilt angle by means of the cradle in order for the user to conveniently view the image displayed in the display unit. More specifically, because the conventional portable communication apparatus is not equipped with a wide-view function, the user may feel inconvenienced when viewing the image displayed in the display unit. For example, in order for the user to conveniently view moving pictures, the portable communication apparatus must be equipped with a separate wide-view device capable of pivoting the display unit such that the display unit can be aligned in a transverse position. However, the conventional portable communication apparatus has no separate wide-view device, and the user may feel inconvenienced when watching movies, videos, or television through the conventional portable communication apparatus.

### SUMMARY OF THE INVENTION

Accordingly, the present invention has been designed to solve the above and other problems occurring in the prior art. An object of the present invention is to provide a portable communication apparatus, which can be installed in a tri-column structure.

Another object of the present invention is to provide a portable communication apparatus capable of providing a tri-column type cradling function as well as a wide-view function for a display unit.

Still another object of the present invention is to provide a portable communication apparatus that enables a user to conveniently watch moving pictures displayed in a display unit by providing a tri-column type cradling function as well as wide-view and stereophonic sound functions.

In order to accomplish the above and other objects, there is provided a portable communication apparatus including a central housing; a first housing rotatably coupled to the central housing about a first hinge axis in such a manner that the first housing is movable closely to or remotely from the central housing; a second housing rotatably coupled to the central housing about a second hinge axis, which is parallel to the first hinge axis, in such a manner that the second housing is movable closely to or remotely from the central housing/first housing while facing the first housing on the basis of the central housing; and a means for supporting the first and second housings such that side portions of the first and second housings make contact with each other after the first and second housings have rotated by a predetermined angle, thereby maintaining the first and second housings and the central housing in a tri-column structure.

### BRIEF DESCRIPTION OF THE DRAWINGS

The above and other objects, features, and advantages of the present invention will be more apparent from the following detailed description taken in conjunction with the accompanying drawings, in which:
FIGS. 1 is a front perspective views illustrating a wide-type portable communication apparatus according to an embodiment of the present invention;
FIG. 2 is a plan view of FIG. 1;
FIGS. 3 is a back perspective view illustrating a wide-type portable communication apparatus according to an embodiment of the present invention;
FIG. 4 is a perspective view illustrating a procedure for installing a wide-type portable communication apparatus in a tri-column structure according to an embodiment of the present invention;

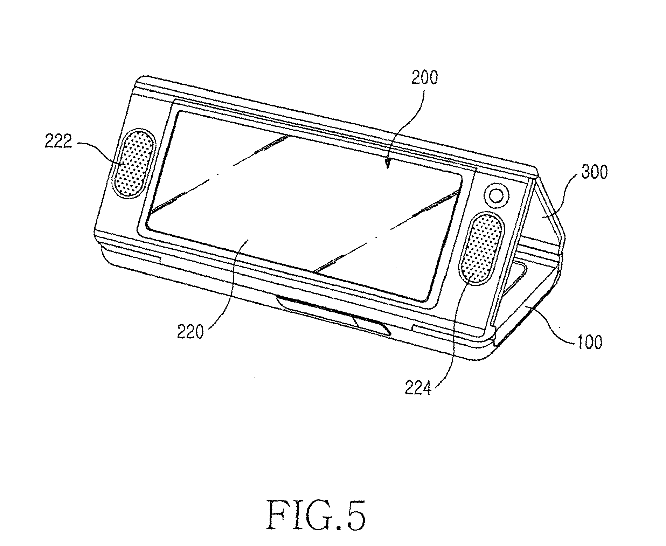

FIG. 5 is a perspective view illustrating a wide-type portable communication apparatus installed in a tri-column structure according to an embodiment of the present invention; and
FIG. 6 is a perspective view illustrating a wide-type portable communication apparatus encased in a leather case together with a portable keyboard according to an embodiment of the present invention.

### DETAILED DESCRIPTION OF THE PREFERRED EMBODIMENT

Hereinafter, preferred embodiments of the present invention will be described with reference to the accompanying drawings. In the following description of the present invention, a detailed description of known functions and configurations incorporated herein will be omitted when it may make the subject matter of the present invention rather unclear.

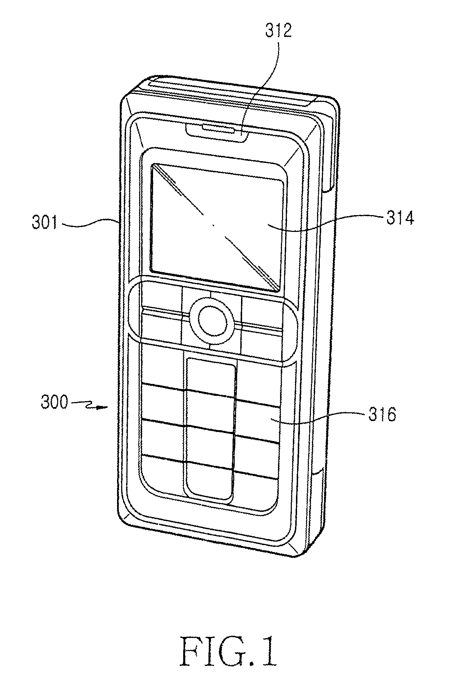

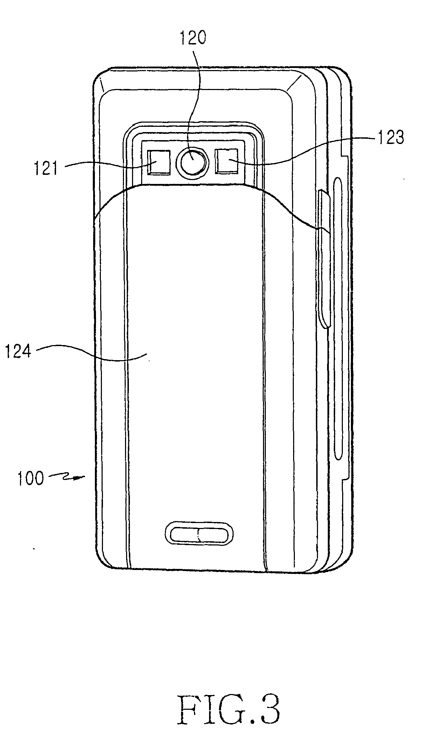

As illustrated in FIGS. 1 and 3, a portable communication apparatus according to the present invention can be installed in a tri-column structure, thereby enabling a user to conveniently view data displayed in a display unit. That is, the portable communication according to the present invention enables the user to conveniently watch moving pictures, such as television, video-on-demand, and satellite broadcastings. The tri-column structure signifies that the portable communication apparatus includes three housings connected to each other in a triangular column pattern. Accordingly, the user can stably install the display unit in a transverse direction thereof.

More specifically, the portable communication apparatus according to the present invention includes a central housing 100, a first housing 200 rotatably connected to a first end portion 101 of the central housing 100, a second housing 300 rotatably connected to a second other end portion 102 of the central housing 100, and a support unit that enables first end portions 201 and 301 of the first and second housings 200 and 300 to contact each other, such that the tri-column structure can be maintained.

As illustrated in FIG. 1, preferably, a single speaker 312 is provided at an upper portion of the second housing 300, a window 314 is positioned below the single speaker 312 and a plurality of keys 316 are aligned below the window 314. The window 314 is made from a transparent material, thereby enabling a user to view data displayed in a display unit of the first housing 200 through the window 314.

As illustrated in FIG. 3, the central housing 100 is provided at a back surface thereof with a camera lens 120, a pair of illumination devices 121 and 123 adjacent to the camera lens 120, and a battery pack 124 adjacent to the camera lens 120.

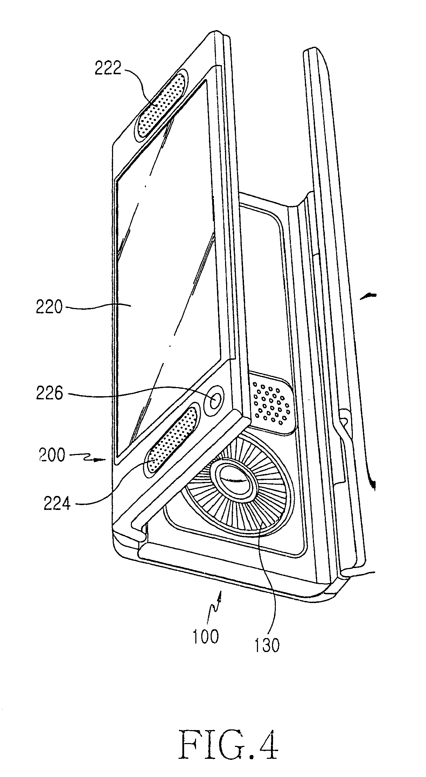

Referring to FIG. 4, the first housing 200 is provided at a front surface thereof with a display unit 220, a speaker adjacent to the display unit 220, and a single key 226 adjacent to the speaker. The speaker includes a first speaker 222 provided at one side of the display unit 220 and a second speaker 224 provided at the other side of the display unit 220 in order to generate stereophonic sound in a vertically upward direction of the first housing 200.

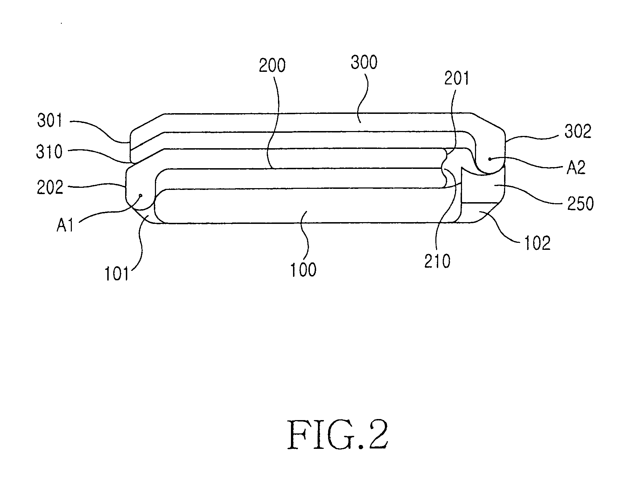

Referring back to FIG. 2, a second end portion 202 of the first housing 200 is bent, preferably, at a right angle. In addition, a second end portion 302 of the second housing 300 is also bent, preferably, at a right angle. A first hinge axis A1 extends along the first end potion 101 of the central housing 100 and the second hinge axis A2 extends along the second end portion of a connection arm 250 coupled to the first end potion 101 of the central housing 100. Therefore, when the first and second housings 200 and 300 are closed with respect to the central housing 100, the first housing 200 is placed on the central housing 100 and the second housing 300 is placed on the first housing 200.

Referring to FIGS. 2 and 4, the support unit includes a recess 210 formed along the first end portion 201 of the first housing 200 and a protrusion 310 provided along the first end portion 301 of the second housing 300 corresponding to the recess 210. After opening the first and second housings 200 and 300 from the central housing 100 by a predetermined angle, if a user places the protrusion 310 in the recess 210, the first and second housings 200 and 300 form a tri-column structure together with the central housing 100. Further, in this state, the central housing 100 is aligned at a bottom of the tri-column structure and the first and second housing 200 and 300 are slantingly aligned on the central housing 100. therefore, the display unit 220 is aligned in a transverse direction and the first and second speakers 222 and 224 are provided at both sides of the display unit 220, thereby generating stereophonic sound.

Preferably, the recess 210 linearly extends along the first end portion 201 of the first housing 200 and the protrusion 310 linearly extends along the first end portion 301 of the second housing 300. In addition, a rotary key 130 may be provided at an upper surface of the central housing 100 to provide a jog-shuttle function. Therefore, the user can manipulate the rotary key by using a finger after the portable communication apparatus has been installed in the tri-column structure.

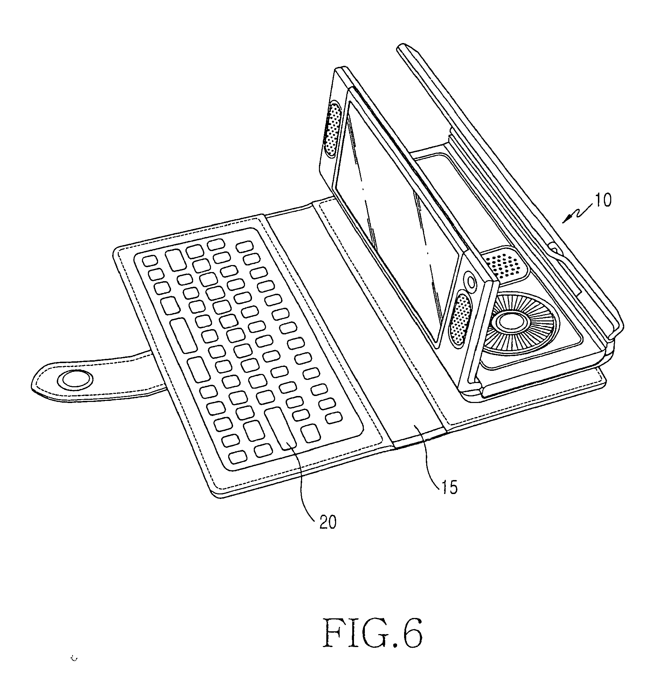

Referring to FIG. 6, a portable communication apparatus 10 according to the present invention can be encased in a leather case 15 together with a portable keyboard 20. The portable communication apparatus 10 and the portable keyboard 20 may operate in a wireless manner.

As described above, the portable communication apparatus according to the present invention is equipped with a tri-column type cradling function as well as wide-view and stereophonic sound functions, thereby enabling the user to easily watch moving pictures, such as television, videos, and satellite broadcastings through the portable communication apparatus.

While the present invention has been shown and described with reference to certain preferred embodiments thereof, it will be understood by those skilled in the art that various changes in form and details may be made therein without departing from the scope of the present invention as defined by the appended claims.

## Claims

1. The portable communication apparatus (10) comprising:
a central housing (100);
a first housing (200) rotatably coupled to the central housing (100) about a first hinge axis (A1) in such a manner that the first housing is moveable towards and away from the central housing;
a second housing (300) rotatably coupled to the central housing about a second hinge axis (A2), which is parallel to the first hinge axis (A1), in such a manner that the second housing is moveable towards and away from the central housing (100) and the first housing (200), while facing the first housing, and
a means (210, 310) for supporting the first and second housings (200, 300), such that side portions (201, 301) of first and second housings contact with each other after the first and second housings have been rotated by predetermined angle, thereby maintaining the first and second housings and the central housing (100) in a tree-column structure.

2. The portable communication apparatus according to claim 1, wherein the supporting means comprises:
a recess (210) formed along an end portion (201) of the first housing (200), and
a protrusion (310) provided along an end portion (301) of the second housing (300), which contact each other for maintaining the tree-column structure.

3. The portable communication apparatus according to claim 2, wherein the protrusion (210) and the recess (310) linearly extend.

4. The portable communication apparatus according to one of the previous claims, wherein the first housing (100) comprises:
a display unit (220) formed at a front surface of the first housing (200);
a plurality of speakers (222, 224) adjacent to the display unit (220), and
at least a single key (226) adjacent to one of the speakers.

5. The portable communication apparatus according to claim 4, wherein first speaker (221) is provided at the first side of the display unit (220), and
a second speaker (224) is provided at the second side of the display unit, the second side being opposite to the first side.

6. The portable communication apparatus according to one of the previous claims, wherein the second housing (300) comprises:
a single speaker (312) provided at a front surface of the second housing;
a window (314) adjacent to the single speaker (312), and
a plurality of first keys (316) adjacent to the window (314).

7. The portable communication apparatus according to claim 6, wherein the window (314) is made of a transparent material.

8. The portable communication apparatus according to claim 6 or 7, wherein data displayed on the display unit (220) of the first housing (200) is visible through the window (314) when the first housing (200) is folded on the central housing (100) and the second housing (300) is folded on the first housing (200).

9. The portable communication apparatus according to one of the previous claims, wherein the first hinge axis (A1) extends along a first end portion (101) of the central housing (100) and the second hinge axis (A2) extends along an end of a connection arm (250) coupled to a second end portion (102) of the central housing (100).

10. The portable communication apparatus according to one of the previous claims, wherein end portions of the first and second housings (200, 300) assigned to the central housing (100) are bent.

11. The portable communication apparatus according to one of the previous claims, wherein the central housing (100) comprises a rotary key (130) with a jog-shuttle function at an upper surface thereof.
